# EUROPEAN PATENT APPLICATION

(11) **EP 4 726 969 A1**
(43) Date of publication of application: **15.04.2026**
(21) Application number: 24205860.0
(22) Date of filing: 10.10.2024
(51) Int. Cl.: H02K 1/14, H02K 1/18, H02K 3/52, H02K 5/20, H02K 9/06

(54) **STATOR ASSEMBLIES**

(71) Applicant: GE Energy Power Conversion Technology Limited, Rugby, Warwickshire CV21 1BD (GB)
(72) Inventor: Loganathan, Arun, 600032 Chennai (IN); T, Sridhar, 600032 Chennai (IN); Veeramohan, Raghu, 600032 Chennai (IN); Hague, Michael, Rugby, CV21 1BU (GB); Mirahki, Hooshang, Rugby, CV21 1BU (GB); Galmiche, Christophe, 54250 Champigneulles (FR); Durantay, Lionel, 54250 Champigneulles (FR)
(74) Representative: Serjeants LLP

(57) **Abstract**

A stator assembly (1) of an axial flux electrical machine is described. The stator assembly (1) includes a plurality of stator coils (4) and a plurality of core segments (2) arranged circumferentially to define a segmented stator core (3). Each core segment (2) includes a tooth part (2a) that extends axially and which is adapted to mount a respective stator coil (4). The stator core (3) can also be non-segmented with a plurality of tooth parts arranged circumferentially. Adjacent mounted stator coils (4) are spaced apart by a substantially trapezoidal void. The stator assembly (1) also includes a plurality of stator coil retainers (10). Each retainer (10) is received in a respective void between a pair of adjacent mounted stator coils (4) and its position in the radial direction is independently adjustable. Each retainer (10) includes at least one channel for receiving a cooling fluid (e.g., cooling air or a suitable cooling liquid such as water or propylene glycol). Each retainer (10) also includes a pair of contact surfaces that are spaced apart in the circumferential direction. Each retainer (10) is adapted to apply a contact pressure to the respective pair of adjacent mounted stator coils (4) through the contact surfaces.

## Description

### Technical Field

The present invention relates to stator assemblies, and in particular to a stator assembly of an axial flux electrical machine (e.g., a motor or generator).

### Summary of the invention

The present invention provides a stator assembly of an axial flux electrical machine (e.g., a motor or generator), the stator assembly comprising:
a plurality of stator coils;
a stator core comprising a plurality of tooth parts arranged circumferentially, each tooth part extending axially and being adapted to mount a respective stator coil, wherein adjacent mounted stator coils are spaced apart by a substantially trapezoidal void; and
a plurality of stator coil retainers, each retainer being received in a respective void between a pair of adjacent mounted stator coils and having a position that is independently adjustable in the radial direction relative to the stator core so that a contact pressure that is applied to each mounted stator coil by an adjacent retainer may be independently adjusted, e.g. during an assembly process.

An axial flux electrical machine (e.g., a motor or generator) may comprise a stator assembly as described above, and a rotor assembly. Magnetic flux flows through the rotor assembly in the axial direction - i.e., along a direction that is parallel to the axis of rotation of the rotor assembly. The rotor assembly may have any suitable construction. Depending on the rotor construction, the electrical machine may function as a synchronous or asynchronous/induction electrical machine. For example, the rotor assembly may be a wound rotor with a rotor winding, a squirrel cage rotor with a plurality of radially-extending electrically conductive bars spaced circumferentially around the rotor assembly and electrically connected between a pair of electrically conductive rings (or "short-circuit rings") that are spaced apart in the radial direction, a permanent magnet rotor with a plurality of permanent magnets spaced circumferentially around the rotor assembly - e.g., on an annular surface of the rotor assembly or within the rotor assembly, or a salient pole/reluctance rotor assembly with a plurality of salient poles spaced circumferentially around the rotor assembly.

Each retainer may comprise a pair of contact surfaces that are spaced apart in the circumferential direction. Each retainer may be adapted to apply a contact pressure to the respective pair of adjacent mounted stator coils through the contact surfaces. The contact pressure may help to retain the stator coils on the stator core. In particular, the contact pressure applied through the contact surface may prevent movement of the adjacent stator coils in the circumferential direction and may also help to limit movement in the axial direction as well. In practice, the contact pressure may not be sufficient by itself to prevent movement of the adjacent stator coils in the axial direction and so each retainer will preferably also include at least one retaining feature - described in more detail below - that is adapted to prevent movement of the adjacent stator coils in the axial direction. Each stator coil may be securely retained between the retaining feature of an adjacent retainer and an opposite surface of the stationary stator core. It will be understood that the stator coil should be retained against the electromagnetic forces that are generated during operation of the electrical machine. If the components are loose, this may permit fretting and so they need to be properly secured. The contact pressure applied by each retainer may also improve cooling of the stator coils to ensuring that there is good thermal coupling between the contact surfaces of the retainer and the facing surface of each stator coil. In particular, each retainer may comprise at least one channel for receiving a cooling fluid (e.g., cooling air or a cooling liquid) so that heat from the stator coils may be transferred to the cooling fluid to cool the stator coils.

The contact pressure applied to adjacent stator coils may be adjusted or altered by adjusting the position of each retainer in the radial direction, e.g., during an assembly process. Once the desired contact pressure has been achieved by adjusting the position of each retainer, the retainers are fixed in position relative to the stator core (e.g., by tightening one or more mechanical fixings and/or fitting one or more stops) so that they do not move during normal operation of the electrical machine. This is described in more detail below.

Each contact surface may be in direct contact with a facing surface of a respective one of the pair of adjacent mounted stator coils. The contact pressure may therefore be applied directly to the facing surfaces of the adjacent mounted stator coils by the contact surfaces of each retainer. However, in some arrangements, one or more interposing components (e.g., shims) may be positioned between a contact surface and the facing surface of an adjacent mounted stator coil - i.e., so that the contact pressure is applied to the facing surface indirectly through the interposing component(s). At least part of each contact surface may be in direct contact with a facing surface of a respective one of the pair of adj acent mounted stator coils and optionally part of each contact surface may be in contact with an interposing component or may not be in contact with either the facing surface or an interposing component. In another arrangement, substantially the whole of the contact surface may be in direct contact with the facing surface of a respective stator coil or with the surface of an interposing component.

Each stator coil may comprise a pair of substantially parallel side sections that define the facing outer surfaces of the stator coil that are in contact with the contact surface of a respective retainer or with an interposing component. A first side section of each stator coil may define a first facing surface that is in contact with a contact surface of an adjacent first retainer or with a first interposing component, and a second side section of each stator coil may define a second facing surface that is in contact with a contact surface of an adjacent second retainer or with a second interposing component. The side sections of each stator coil may extend substantially radially - along a radial direction of the stator assembly, but not necessarily along a radius thereof. The facing surfaces of each stator coil may also extend substantially radially. Each stator coil may comprise a first end section that extends between the first and second sides sections at a first end of the stator coil, and a second end section that extends between the first and second side sections at a second, opposite, end of the stator coil. The first end section may be arranged at a radially outer part of the stator core and the second end section may be arranged at a radially inner part of the stator core, or *vice versa,* for example. The first and second end sections may be curved, for example. Each stator coil may comprise an inner void within the side and end sections in which a respective tooth part of the stator core is received so that the stator coil extends around the tooth part when it is properly mounted.

The individual stator coils are typically electrically interconnected to define a stator winding. In particular, the stator coils may be interconnected to define a concentrated or distributed stator winding, for example.

The stator winding may be electrically connected to a power converter, for example, for supplying power to the stator winding to operate the electrical machine. The power converter may be electrically connected to a power network or grid, for example, and may be used to control the rotational speed and/or torque of the electrical machine in a known manner.

Each tooth part may comprise a pair of substantially parallel side surfaces that extend substantially radially, and a pair of end surfaces that extend substantially circumferentially - i.e., along a circumferential direction of the stator assembly. The tooth part may have a substantially rectangular cross-section when viewed in the axial direction. The side surfaces of each tooth part may be used to mount and support the respective stator coil. In other words, each stator coil may be positioned on a respective tooth part with an inner surface of the first and second side sections in contact with, or supported by, the facing side surfaces of the tooth part. If the end surfaces of each tooth part are substantially parallel and the end sections of the respective stator coil are curved, there may be gap or void between the inner surface of each end section and the facing end surface of the tooth part. Alternatively, the end surfaces of each tooth surfaces may be curved to better support the curved end surface of the mounted stator coil.

The stator core may comprise a base part from which each tooth extends axially. The base part may comprise a first planar surface from which each tooth part extends, and a second planar surface. The first and second planar surfaces may be substantially parallel and may have a normal that extends in the axial direction - i.e., which is parallel to the longitudinal axis of the stator assembly. The first and second planar surfaces may be substantially annular.

The stator core may be a segmented stator core. In particular, the stator assembly may comprise a plurality of core segments arranged circumferentially to define the segmented stator core. Each core segment may comprise a tooth part that extends axially and which is adapted to mount a respective stator coil.

Each core segment may comprise a base part. The tooth part may extend axially from the base part. The base part of each core segment may comprise a first planar surface from which the tooth part extends, and a second planar surface. The first and second planar surfaces may be substantially parallel and may have a normal that extends in the axial direction - i.e., which is parallel to the longitudinal axis of the stator assembly. The base part of each core segment may comprise a pair of side surfaces that are spaced apart in the circumferential direction and which may extend substantially along a radius of the stator core. The base part of each core segment may also comprise a pair of end surfaces that are spaced apart in the radial direction - e.g., a first end surface that is arranged at a radially outer part of the stator core and a second end surface that is arranged at a radially inner part of the stator core or *vice versa.* The base part of each core segment may have a substantially trapezoidal cross-section when viewed in the axial direction - e.g., where the radially-inner end surface of each base part is shorter in the circumferential direction than the radially-outer end surface. Each side surface may be in contact with a facing side surface of an adjacent core segment. In other words, the core segments may be assembled together with the side surfaces of their respective base parts in contact with each other. In another arrangement, the core segments may be assembled together with the side surfaces of their respective base parts spaced apart from each other by a gap or by an interposing component that is positioned between the adjacent core segments. A second side surface of the base part of a first core segment may be arranged next to a first side surface of the base part of an adjacent second core segment, a second side surface of the base part of the second core segment may be arranged next to a first side surface of the base part of an adjacent third core segment, and so on, until a second side surface of the base part of an nth core segment may be arranged next to a first side surface of the base part of the first core segment, where n is an integer that corresponds to the total number of core segments. Depending on the overall size and design of the electrical machine, the stator core may be assembled from any suitable number of core segments.

Each core segment may be mounted to an annular stator support of the stator assembly. The stator support may also be segmented - i.e., formed from two or more support segments assembled together in any suitable manner. For example, support segments may be connected using a plurality of mechanical fixings, e.g., threaded fasteners such as bolts or screws. The stator support may have a first annular surface and a second, opposite, annular surface. The stator support may have a laminated or solid construction.

Each core segment may have at least one engagement profile and the first annular surface of the stator support (i.e., the surface that faces towards the core segments) may comprise a plurality of circumferentially-spaced corresponding engagement profiles. For example, each core segment may have one or more dovetail or T-shaped profiles and the stator support may have a plurality of corresponding dovetail or T-shaped profiles in its first annular surface. In one arrangement, each core segment may have one or more protrusions with an engagement profile and the stator support may have a plurality of recesses with a corresponding engagement profile, where each recess receives a protrusion of a respective core segment. The one or more protrusions may extend from the second planar surface of the base part of each core segment. In another arrangement, each core segment may have one or more recesses with an engagement profile and the stator support may have a plurality of protrusions with a corresponding engagement profile, where each protrusion is received in a recess of a respective core segment. The one or more recesses may be formed in the second planar surface of each core segment. The second planar surface of each core segment will face towards the first annular surface of the stator support with the plurality of corresponding protrusions or recesses. Each protrusion and its corresponding recess are designed to permit the core segments to move radially relative to the stator support during an assembly process with each protrusion received in its corresponding recess, but to prevent movement of each core segment in the axial and circumferential directions. This arrangement allows each core segment to be inserted easily into the stator support during assembly of the stator core, and also to be removed from the stator support if necessary, e.g., if it needs to be replaced. The core segments are inserted and removed along the radial direction. Once assembled, the core segments are fixed in position relative to the stator support until such time as they may need to be released to be removed from the stator support.

The core segments may be assembled to the stator support and the stator coils may then be subsequently mounted to the respective assembled core segments. Alternatively, the stator coils may be mounted to the respective core segments before the core segments are assembled to the stator support. The stator coils may be pre-formed using any known method, including a "resin rich" process where the individual stator coils are impregnated with a suitable resin and then mounted to the core segment. Alternatively, during manufacture of the core segments, a stator coil may be mounted to a respective core segment and the core segment and mounted stator coil may be subjected to a vacuum pressure impregnation (VPI) process using a suitable resin. In other words, the core segments may be pre-fabricated to comprise an integral stator coil that may be electrically interconnected after the core segments have been inserted into the stator support.

Each core segment may have a laminated construction. In other words, each core segment may be formed from a stack of thin lamination sheets that are stamped or cut to have an outer profile. The lamination sheets may optionally be made of electrical grade steel with an insulating coating. The lamination sheets are stacked together in the radial direction. The laminated construction significantly reduces eddy current losses in the core segment during operation of the electrical machine. The stacked lamination sheets are preferably bonded. The outer profile of the lamination sheets may define the base part and the tooth part of each core segment. The outer profile of the lamination sheets may also define the one or more projections or one or more recesses described above for mounting each core segment to the stator support. In one arrangement, the lamination sheets that are stacked together may be identical so that the side surfaces of the base part of each core segment are initially substantially parallel. The core segment may then be machined so that the side surfaces are angled and the base part has a substantially trapezoidal cross-section when viewed in the axial direction. Using identical lamination sheets may simplify the stacking process. If the stator core is not segmented, it may also have a laminated construction. It may also have a solid construction.

Each stator core retainer is received in a respective substantially trapezoidal void between a pair of adjacent mounted stator coils. Each retainer is preferably removable or is removably mounted as described in more detail below. This may allow a particular retainer to be removed if necessary. The stator assembly is designed in such a way that permits the retainers to move radially relative to the adjacent mounted stator coils (and relative to the stator core/core segments and stator support) at least during the assembly process - i.e., the position of the retainers is independently adjustable in the radial direction. The retainers may then be fixed in position so that further relative movement is not possible - e.g., during normal operation of the electrical machine. Because the facing surfaces of the pair of adjacent mounted stator coils are angled with respect to each other - i.e., they are not parallel - to define a substantially trapezoidal void therebetween, it means that the contact pressure that is applied by the contact surfaces of each retainer and/or the contact area between the contact surfaces and the facing surfaces of the adjacent mounted stator coils may be adjusted depending on the radial position of each retainer within the respective void. In other words, moving a retainer radially inwardly relative to the stationary parts of the stator assembly will increase the contact pressure that is applied to the adjacent mounted stator coils and *vice versa.* The contact pressure can be adjusted to ensure that each stator coil is properly supported within the stator assembly. The contact pressure will normally have a component in the circumferential direction. The retainers may be fixed or locked in position once the contact pressure has been adjusted to the desired level - i.e., once the radial positioning of each retainer has been adjusted. The contact surfaces of each retainer may be arranged at substantially the same angle as the facing surfaces of the adjacent mounted stator coils so that each retainer has a substantially trapezoidal cross-section when viewed in the axial direction. If the contact and facing surfaces have substantially the same angle, they may be brought into better sliding surface contact. This may improve the transfer of heat from the adjacent mounted stator coils to the retainer by increasing the contact surface area between them, particularly if the contact pressure is increased so that efficient thermal coupling is maintained. Alternatively, as explained above, one or more interposing components may be positioned between each contact surface and the facing surface of the adjacent mounted stator coil. In this arrangement, the contact surface and/or the facing surface may be brought into sliding surface contact with the interposing component(s). The one or more interposing components may be used to compensate for any differences in the shape of the stator coils, for example. Moving a retainer radially inwardly relative to the stationary parts of the stator assembly may increase the contact area - the surface area of each contact surface that is in contact with the facing surface of the adjacent mounted stator coil or any interposing component(s) and *vice versa.*

Each void may be defined generally on three sides by the facing surfaces of the adjacent mounted stator coils and the base parts of the adjacent core segments - i.e., the core segments that mount the adjacent stator coils. If the stator core is not segmented, each void may be defined generally on three sides by the facing surfaces of the adjacent mounted stator coils and the base part of the stator core. Each void may be open on the remaining sides, and in particular open at a radially outer side that defines an opening into which the respective retainer may be inserted in the radial direction during the assembly process. In other words, the retainers may be inserted radially inwardly into the voids from outside the stator coil and then fixed in position. Each retainer may comprise a first surface and a second, opposite, surface that faces towards the core segments or stator core. The second surface of each retainer may contact the base parts of adjacent core segments or the base part of the non-segmented stator core. An interface between adjacent core segments (i.e., where the interface is defined by the adjacent side surfaces of the base parts that are either in direct contact or that may be spaced apart, and which may extend substantially along a radius of the stator core) may be arranged substantially at the centre of the second surface of the respective retainer. Each retainer may comprise a pair of angled side surfaces that define the contact surfaces. Each retainer may comprise a first end that is arranged at a radially outer part of the stator core and a second end that is arranged at a radially inner part of the stator core or *vice versa.* The first end and/or the second end may be closed or may be open as described in more detail below.

The first surface of each retainer that faces away from the stator core may comprise at least one retaining feature (or lip) that extends (or projects from the retainer) in the circumferential direction and is adapted to prevent movement of the adjacent stator coil in the axial direction. A pair of retaining features (or lips) may extend in opposite circumferential directions and are adapted to prevent movement of both adjacent stator coils in the axial direction. Each retaining feature may extend along substantially the whole of an edge the first surface of each retainer. Each retaining feature may directly contact an adjacent edge of the respective stator coil. Each stator coil may therefore be axially retained or captured between the base part of the respective core segment or non-segmented stator core and the retaining feature of at least one adjacent retainer. Typically, each stator coil will be retained by the retaining feature of an adjacent first retainer which overlaps with a first side section of the stator coil and by the retaining feature of an adjacent second retainer which overlaps with a second side section of the stator coil. Providing such retaining features on the retainers avoids the need for shoe caps for stator coil retention, thereby leading to significant reductions in cost and materials.

Each retainer may be fixed in position by one or more mechanical fixings such as bolts or screws, for example. The mechanical fixings may be inserted through one or more aligned openings in the stator support and the stator core. Each retainer may be fixed by two or more mechanical fixings that are spaced apart in the radial direction. The openings in the stator core may be defined at the interface between adjacent core segments. In this case, part of each opening may be defined by a notch or recess that is formed in the side surface of each adjacent core segment - where the notches or recesses are aligned when the core segments are assembled together to form the stator core. The mechanical fixings may then be inserted into one or more aligned openings in each retainer - i.e., in the second surface of each retainer that faces towards the stator core. Each opening in each retainer may be internally screw-threaded opening for receiving an externally screw-threaded end of a mechanical fixing. The aligned openings in the stator support and the stator core may be elongate (e.g., formed as slots that extend along the radial direction) so that each retainer is allowed to move radially relative to the rest of the stator assembly until the mechanical fixings are fully tightened. In other words, when screwed to the retainer, the one or more mechanical fixings may be free to move within the elongate openings or slots in the stator support and the stator core so that each retainer may be moved radially to adjust the contact pressure that is applied to the adjacent stator coils, for example. There is therefore a clearance between the mechanical fixing and the inner surface of the elongate opening or slot that can accommodate the required amount of radial movement of the respective mechanical fixing, and hence of the stator coil retainer to which the one or more mechanical fixings are secured. Once each retainer has been properly positioned within the respective trapezoidal void, the one or more mechanical fixings may be fully tightened to clamp the retainer against the stator core and prevent any further movement in the radial direction. It will be understood that other ways of allowing relative movement of each retainer may also be used. For example, instead of each retainer having one more internally screw-threaded openings, e.g., in its second surface, its second surface may comprise a profiled recess that captures one or more fixing blocks. The recess may extend along the radial direction when each retainer is positioned in its respective substantially trapezoidal void and each fixing block may be free to slide within the recess. For example, the recess may have a dovetail or T-shaped profile that captures each fixing block and where each fixing block may have a corresponding dovetail or T-shaped profile. Each fixing block may comprise an opening for receiving a mechanical fixing such as a bolt or screw. In particular, the opening in each fixing block may be an internally screw-threaded opening for receiving an externally screw-threaded end of a mechanical fixing. A mechanical fixing may be inserted through aligned openings in the stator support and the stator core and then into the opening in an aligned fixing block. Each retainer may be moved radially to adjust the contact pressure that is applied to the adjacent stator coils, for example. In particular, each retainer may be moved relative to the fixing block(s) that remain stationary but slide in the recess. Once each retainer has been properly positioned within the respective trapezoidal void, the one or more mechanical fixings may be fully tightened to clamp the retainer against the stator core and prevent any further movement in the radial direction.

Instead of using one or more mechanical fixings (e.g., threaded fasteners) the second surface of each retainer - i.e., the surface that faces towards the stator core - may have at least one engagement profile. The stator core may comprise a plurality of circumferentially-spaced corresponding engagement profiles. For example, each retainer may have one or more dovetail or T-shaped profiles and the stator core may have a plurality of corresponding dovetail or T-shaped profiles. The engagement profiles on the stator core may be interleaved with the teeth parts so that each retainer is positioned in a respective trapezoidal void between a pair of circumferentially adjacent teeth parts. If the stator core is segmented, each engagement profile may be defined by a pair of circumferentially adjacent stator core segments. In one arrangement, each retainer may have one or more protrusions with an engagement profile and the stator core may have a plurality of recesses with a corresponding engagement profile, where each recess receives a protrusion of a respective retainer. In another arrangement, each retainer may have one or more recesses with an engagement profile and the stator core may have a plurality of protrusions with a corresponding engagement profile, where each protrusion is received in a recess of a respective retainer. Each protrusion and its corresponding recess are designed to permit the retainers to move radially relative to the stator core during an assembly process with each protrusion received in its corresponding recess, but to prevent movement of each retainer in the axial and circumferential directions. This arrangement allows each retainer to be inserted easily into the stator core during assembly of the stator core, and also to be removed from the stator core if necessary, e.g., if it needs to be replaced. Once assembled and the contact pressure has been adjusted to the desired level - i.e., once the radial positioning of each retainer has been adjusted - the retainers are fixed in position relative to the stator core. Each retainer may be fixed or secured by inserting one or more wedges or clamps into a gap between the respective engagement profiles, for example.

Each retainer may be prevented from moving in the radial direction by one or more stops. For example, a stop may be positioned to contact the radially-inner end of each retainer to prevent movement radially inwardly and a stop may be positioned to contact the radially-outer end of each retainer to prevent movement radially outwardly. The stops at the radially outer end of each retainer may be fitted after the retainers have been inserted into the substantially trapezoidal voids between the mounted stator coils in a radial direction. Movement in the axial direction may be prevented by one or more mechanical fixings that may be inserted through aligned openings in the stator support and the stator core and then inserted into one or more openings in each retainer, e.g., in the second surface. In this case, the retainers typically will not be able to move in the radial direction because of the stops so there is no need for the aligned openings in the stator support and the stator core to be elongate or formed as slots. Contact pressure and/or contact area may be adjusted by inserting one or more interposing components (e.g., shims) between the contact surfaces of each retainer and the facing surfaces of the adjacent mounted stator coils if necessary. Using shims may compensate for variation in the stator coils. Each shim may have substantially parallel main surfaces. If the retainers are able to move in the radial direction, for example, if different stops are used to adjust the radial positioning of each retainer, the aligned openings in the stator support and the stator core may be elongate or formed as slots, or the fixing blocks described above may be used to allow for radial movement of the retainers to adjust the applied contact pressure before the stops are fitted.

Each retainer may comprise at least one channel through which cooling air may flow - e.g., from an air inlet to an air outlet. Cooling air may be moved through the retainers by a fan or blower, for example, which circulates air through the stator assembly. Each retainer may comprise two or more air inlets and/or two or more air outlets. The first end and/or the second end of each retainer may be substantially open - e.g., the open ends may define one or more air inlets through which cooling air may enter the retainer and one or more air outlets through which cooling air may leave the retainer. Cooling air may flow into each retainer through the radially-inner end and may flow out of each retainer through the radially-outer end or *vice versa.* It will be understood that many different air cooling arrangements are possible - for example, cooling air may flow into each retainer through a single air inlet, flow through one or more internal channels, and flow out of each retainer through one or more air outlets. The one or more internal channels may be arranged so that the cooling air flows substantially in the radial direction, or in a serpentine or zig-zag direction, for example. The direction of the cooling air flow within the one or more internal channels may be determined by one or more internal baffles or surfaces. Heat generated in the stator coils during operation of the electrical machine may be transferred to the retainers and then to the cooling air flowing through the retainers - i.e., where the retainers act as heat exchangers. Each internal channel may be divided by one or more partitions to increase the surface area for transferring heat from each retainer to the cooling air.

Each retainer may comprise at least one channel through which a cooling liquid may flow - e.g., from a cooling liquid inlet to a cooling liquid outlet. Heat generated in the stator coils during operation of the electrical machine may be transferred to the retainers and then to the cooling liquid flowing through the retainers - i.e., where the retainers act as heat exchangers. Improved cooling may allow power density of the electrical machine to be increased. Each retainer may comprise at least one channel through which a cooling liquid may flow and at least one channel through which cooling air may flow so that the retainers provide a dual cooling function - i.e., both air and liquid cooling. Each retainer may comprise two or more cooling liquid inlets and/or two or more cooling liquid outlets. The first end of each retainer may comprise one or more cooling liquid inlets and/or one or more cooling liquid outlets. The second end of each retainer may comprise one or more cooling liquid inlets and/or one or more cooling liquid outlets. It will be understood that many different liquid cooling arrangements are possible - for example, cooling liquid may flow into each retainer through one or more cooling liquid inlets, flow through one or more internal channels, and flow out of each retainer through one or more cooling liquid outlets. The cooling liquid inlet(s) and outlet(s) may be at the radially-inner end of each retainer or at the radially-outer end of each retainer - i.e., the cooling liquid inlet(s) and outlet(s) are formed at the same end of each retainer. The cooling liquid inlet(s) may be at the radially-inner end of each retainer and the cooling liquid outlet(s) may be at the radially-outer end of each retainer or *vice versa* - i.e., the cooling liquid inlet(s) and outlet(s) are formed at opposite ends of each retainer. The one or more internal channels may be arranged so that the cooling liquid flows substantially in the radial direction, or in a serpentine or zig-zag direction, for example. If the cooling liquid flows between cooling liquid inlet(s) and cooling liquid outlet(s) arranged at opposite ends of each retainer, this may help to minimise any difference in the cooling provided by the contact surfaces. For arrangements where the cooling liquid inlet(s) and outlet(s) are arranged at the same end of each retainer, this will normally require the cooling liquid to flow in a first radial direction and then in a second, opposite, radial direction (e.g., radially inwardly and then radially outwardly or *vice versa*) and this may lead to difference in the cooling provided by the two contact surfaces - i.e., where the cooling liquid flowing past one contact surface is warmer than the cooling liquid flowing part the other contact surface. The cooling liquid inlet(s) and/or the cooling liquid outlet(s) may be formed in the second surface of each retainer - i.e., the surface that faces towards the stator core - or in one of both of the end surfaces of each retainer.

A pipe may be fluidly connected to each cooling liquid inlet through which the cooling liquid is supplied and a pipe may be fluidly connected to each cooling liquid outlet through which the cooling liquid is removed. The pipes may pass through the stator core and the stator support, or optionally just through the stator support.

The pipes may be fixedly connected to each retainer, e.g., by welding, bonding or fitting them to the retainer body. This allows for easy detection of the leakage of the cooling liquid by visually inspecting the weld sites at the ends of the retainers, for example.

Each pipe may comprise an isolation valve or non-return valve.

The pipes may be fluidly connected to form a closed-loop liquid cooling circuit. One or more cooling circuit outlets may be fluidly connected to one or more cooling circuit inlets for re-circulation of the cooling liquid through the closed-loop liquid cooling circuit. The closed-loop liquid cooling circuit may comprise one or more heat exchangers for removing heat from the cooling liquid and one or more pumps for circulating the cooling liquid, for example. Any suitable cooling liquid may be used, e.g., water, propylene glycol etc.

Each retainer may be formed from stainless steel, aluminium or a suitable ceramic material, for example. Each retainer may be formed by any suitable manufacturing method such as machining or three-dimensional printing, for example.

Each retainer may be formed from a single type of material - e.g., a non-magnetic material such as stainless steel, aluminium or a suitable ceramic material, for example. In other arrangements, a first part of each retainer that is arranged adjacent the stator core may be made of a magnetic material and a second part of each retainer that is spaced apart from the stator core (and which may define the first surface of each retainer, for example) may be made of a non-magnetic material. In other arrangements, an inner part (or "core") of each retainer may be made of a magnetic material and an outer part (or "surface part") of each retainer may be made of a non-magnetic material.

A plurality of grooves or channels may be formed in the first surface of each retainer that faces away from the stator core. The grooves or channels provide an irregular surface that may help minimise electrical losses.

A plurality of grooves or channels may be formed in the contact surfaces or side surfaces of each retainer. Cooling air may therefore also flow through these grooves or channels - i.e., between each retainer and the facing surface of the adjacent mounted stator coils or an interposing component. A plurality of grooves may optionally also be formed in the surface(s) of the internal channels through which cooling air flows through each retainer, e.g., the grooves may be formed in one or more inner surfaces of each retainer. One or more fins may also be provided in each internal channel to improve the transfer of heat to the cooling air.

### Drawings

Figure 1 is a perspective view of a stator assembly according to the present invention;
Figure 2 is a perspective view of a stator support of the stator assembly of Figure 1 (i.e., without the segmented stator core, stator coils and retainers);
Figure 3 is a perspective view of a stator support and segmented stator core of the stator assembly of Figure 1 (i.e., without the stator coils and retainers);
Figure 4 is a front perspective view of a core segment of the segmented stator core of Figure 3;
Figure 5 is top view of the core segment of Figure 3;
Figure 6 is a rear view of the core segment of Figure 3;
Figure 7 is a front view of a stator support, segmented stator core, and mounted stator coils of the stator assembly of Figure 1 (i.e., without the retainers);
Figure 8 is a perspective view of a stator support, segmented stator core, and mounted stator coils of the stator assembly of Figure 1 (i.e., without the retainers);
Figure 9 is a rear perspective view of a retainer of the stator assembly of Figure 1;
Figure 10 is a front perspective view the first retainer of Figure 9;
Figure 11 is a rear perspective view of part of the stator assembly of Figure 1 showing the retainer of Figures 9 and 10 fixed to the stator support;
Figure 12 is a front perspective view of the part of the stator assembly shown in Figure 11;
Figure 13 is a cross section view of the part of the stator assembly shown in Figure 11;
Figures 14 and 15 are rear perspective views of an alternative retainer;
Figure 16 is a cross section view of part of an alternative stator assembly showing the retainer of Figures 14 and 15 fixed to the stator support;
Figure 17 is a front perspective view of an alternative retainer;
Figure 18 is a cross section view of an alternative stator assembly showing a retainer fixed to the stator support using stop blocks;
Figure 19 is a front perspective view of an alternative liquid-cooled retainer and interposing shims;
Figure 20 is a cross section view of an alternative stator assembly showing the retainer of Figure 19 fixed to the stator support;
Figure 21 is a cross section view of the retainer of Figure 19;
Figure 22 is a cross section view of an alternative stator assembly showing an alternative liquid-cooled retainer fixed to the stator support;
Figure 23 is a cross section view of an alternative stator assembly showing an alternative liquid-cooled retainer fixed to the stator support;
Figure 24 is a front perspective view of an alternative dual-cooled retainer;
Figure 25 is a cross section view of an alternative liquid-cooled retainer with liquid inlet and outlet at opposite ends of the retainer;
Figure 26 is a cross section view of an alternative liquid-cooled retainer with liquid inlet and outlet at the same end of the retainer;
Figure 27 is a cross section of an alternative air-cooled retainer with internal baffles;
Figure 28 is a front perspective view of an alternative retainer with parts formed from different materials;
Figure 29 is a front perspective view of an alternative retainer with inner and outer parts formed from different materials; and
Figure 30 is a rear perspective view of an alternative retainer with grooves in the contact surfaces.

### Specific description

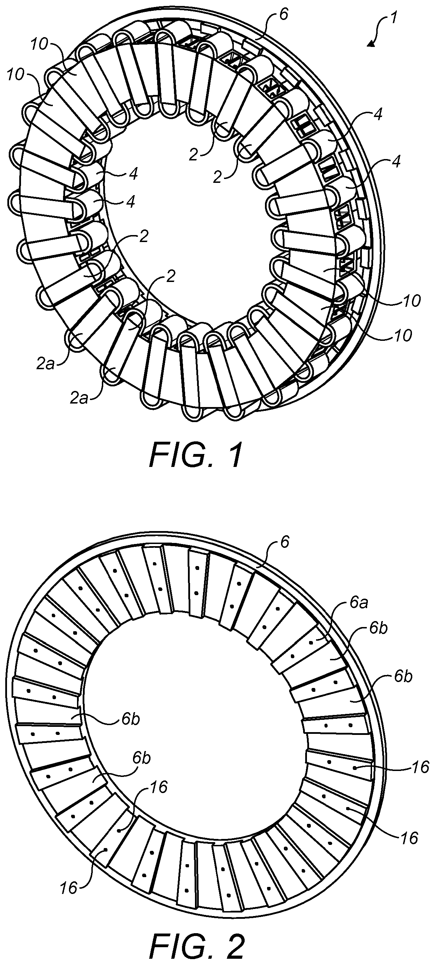

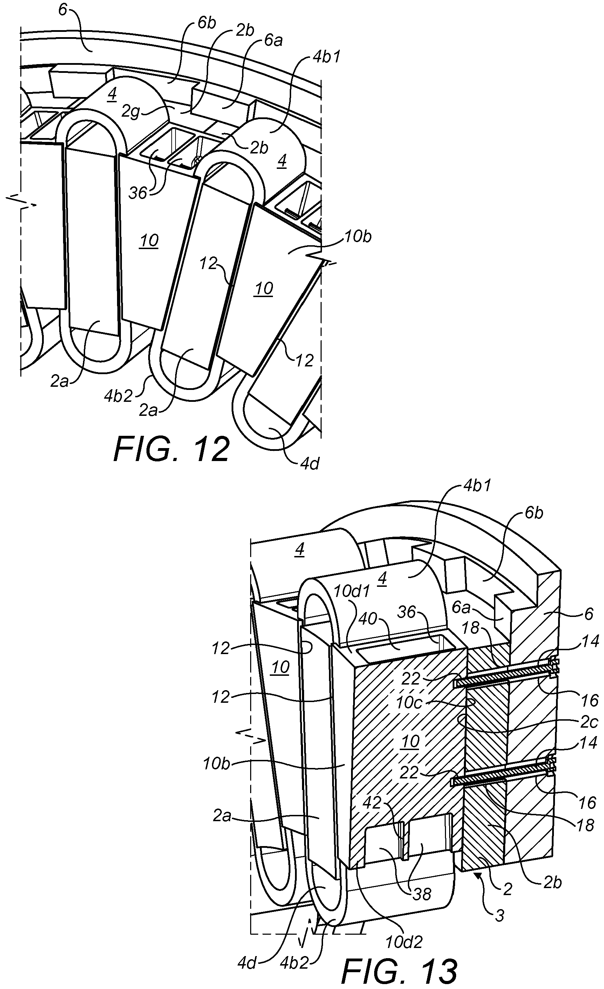

Referring initially to Figures 1 to 13, a stator assembly 1 of an axial flux electrical machine includes a plurality of core segments 2 that are arranged circumferentially to define a segmented stator core 3. It will be readily understood that the stator core may alternatively be a non-segmented stator core with a plurality of tooth parts arranged circumferentially.

The stator assembly 1 includes a plurality of stator coils 4.

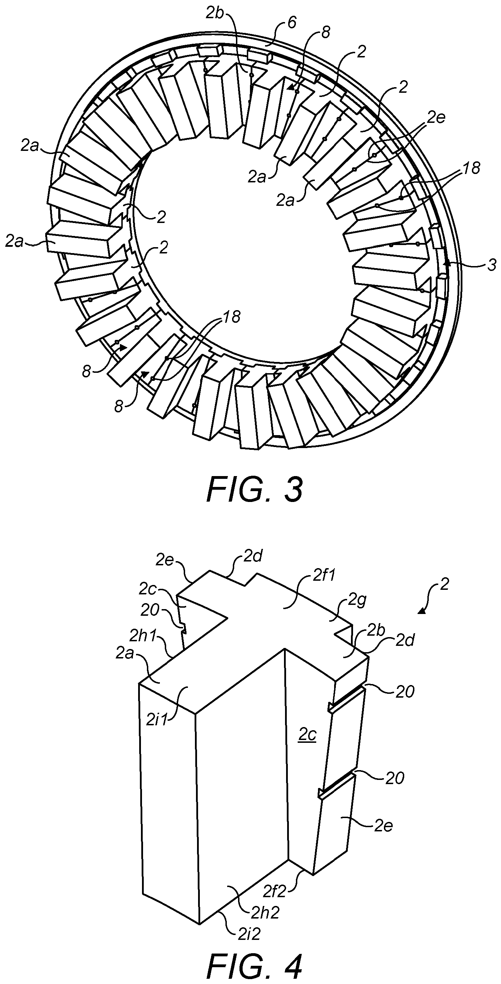

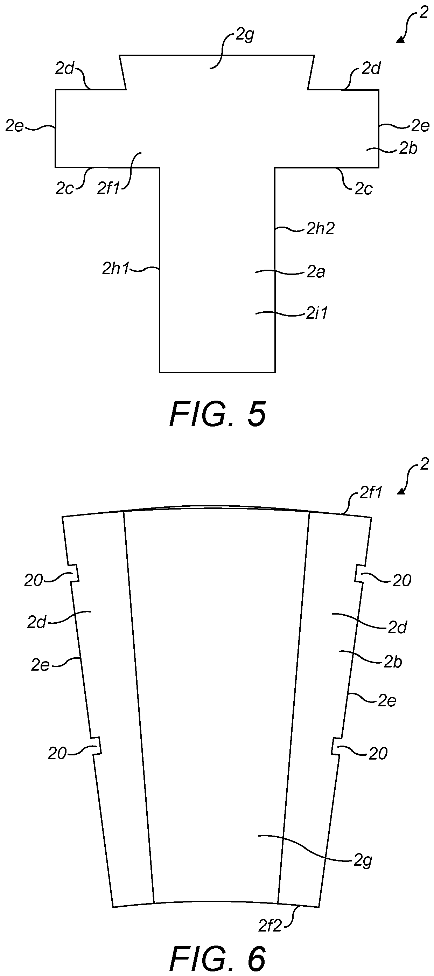

Each core segment 2 includes a tooth part 2a that extends axially and which is adapted to mount a respective stator coil 4 as described in more detail below. Each core segment 2 also includes a base part 2b. The tooth part 2a extends axially from the base part 2b. The base part 2b of each core segment 2 includes a first planar surface 2c from which the tooth part 2a extends, and a second planar surface 2d. The first and second planar surfaces 2c, 2d are substantially parallel and have a normal that extends in the axial direction - i.e., which is parallel to the longitudinal axis of the stator assembly 1. The base part 2b of each core segment 2 also includes a pair of side surfaces 2e that are spaced apart in the circumferential direction and which may extend substantially along a radius of the stator core 3. The base part 2b of each core segment 2 also includes a pair of curved end surfaces that are spaced apart in the radial direction - e.g., a first end surface 2f1 that is arranged at a radially outer part of the stator core 3 and a second end surface 2f2 that is arranged at a radially inner part of the stator core 3. The base part 2b of each core segment 2 has a substantially trapezoidal cross-section when viewed in the axial direction as shown in Figure 6 - e.g., where the radially-inner end surface 2f2 of each base part 2b is shorter in the circumferential direction than the radially-outer end surface 2f1. Each side surface 2e is in contact with a facing side surface of an adjacent core segment 2. In other words, the core segments 2 are shown in Figure 3 to be assembled together with the side surfaces 2e of their respective base parts 2b in contact with each other. However, in another arrangement, the core segments 2 may be assembled together with the side surfaces 2e of their respective base parts 2b spaced apart from each other by a gap or by an interposing component that is positioned between the adj acent core segments.

Each core segment 2 is mounted to an annular stator support 6 of the stator assembly. The stator support has a first annular surface 6a and a second, opposite, annular surface.

Each core segment 2 has a dovetail engagement protrusion 2g that extends from the second planar surface 2d. The first annular surface 6a of the stator support 6 (i.e., the surface that faces towards the core segments) has a plurality of circumferentially-spaced dovetail engagement recesses 6b. This is most clearly shown in Figure 2 where the core segments 2, stator coils 4, and retainers 10 have been omitted for clarity. Each recess 6b receives a protrusion 2g of a respective core segment 2. Each protrusion 2g and its corresponding recess 6b are designed to permit the core segments 2 to move radially relative to the stator support 6 during an assembly process with each protrusion received in its corresponding recess, but to prevent movement of each core segment 2 in the axial and circumferential directions. This arrangement allows each core segment 2 to be inserted easily into the stator support 6 during assembly of the segmented stator core 3, and also to be removed from the stator support if necessary, e.g., if it needs to be replaced. The core segments 2 are inserted and removed along the radial direction. Once assembled, the core segments 2 are fixed in position relative to the stator support 6 until such time as they may need to be released to be removed from the stator support.

Each core segment 2 may have a laminated construction. In other words, each core segment 2 may be formed from a stack of thin lamination sheets that are stamped or cut to have an outer profile. The lamination sheets may optionally be made of electrical grade steel with an insulating coating. The lamination sheets are stacked together in the radial direction. The laminated construction significantly reduces eddy current losses in the core segment during operation of the electrical machine. The stacked lamination sheets are preferably bonded. The outer profile of the lamination sheets may define the tooth part 2a and the base part 2b of each core segment 2. The outer profile of the lamination sheets may also define the dovetail projection 2g for mounting each core segment 2 to the stator support 6. In one arrangement, the lamination sheets that are stacked together may be identical so that the side surfaces of the base part of each core segment are initially substantially parallel. The core segment 2 may then be machined so that the side surfaces 2e are angled and the base part 2b has a substantially trapezoidal cross-section when viewed in the axial direction. Using identical lamination sheets may simplify the stacking process. If the stator core 3 is not segmented, it may also have a laminated construction.

The tooth part 2a of each core segment 2 is adapted to mount a respective stator coil 4. In particular, each axially-extending tooth part 2a may comprise first and second substantially parallel side surfaces 2h1, 2h2 that extend substantially radially, and first and second end surfaces 2i 1, 2i2 that extend substantially circumferentially - i.e., along a circumferential direction of the stator assembly. The tooth part 2a may have a substantially rectangular cross-section when viewed in the axial direction. The side surfaces 2h1, 2h2 of each tooth part 2a are used to mount and support the respective stator coil 4. Each stator coil 4 includes first and second parallel side sections 4a1, 4a2 that extend substantially radially - i.e., along a radial direction of the stator assembly, but not necessarily along a radius thereof. Each stator coil 4 also includes first and second curved end sections 4b 1, 4b2 that extend between the side sections 4a. The first end section 4b 1 is arranged at a radially outer part of the stator core 3 and the second end section 4b2 is arranged at a radially inner part of the stator core 3. Each stator coil 4 includes an inner void 4d that receives the tooth part 2a of the respective core segment 2 so that the stator coil 4 extends around the tooth part 2a when it is properly mounted. Each stator coil 4 is positioned on the respective tooth part 2a with an inner surface of the first and second side sections 4a1, 4a2 in contact with, or supported by, the facing side surfaces 2h1, 2h2 of the tooth part 2a.

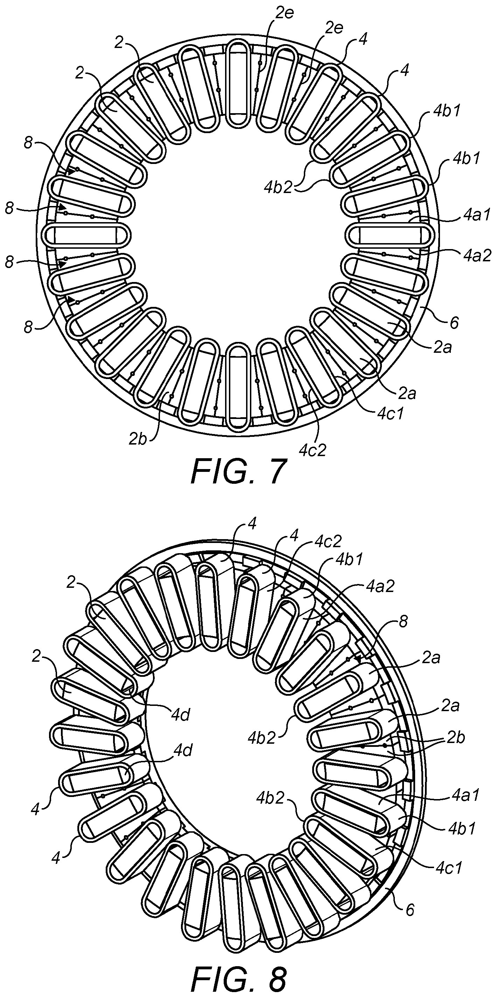

As most clearly shown in Figure 7, adjacent mounted stator coils 4 are spaced apart by a substantially trapezoidal void 8.

The stator assembly 1 includes a plurality of stator coil retainers 10. Each retainer 10 is received in a respective void 8 between a pair of adjacent mounted stator coils 4.

The position of each retainer 10 is independently adjustable in the radial direction relative to the stator core 3 as described in more detail below.

Each retainer 10 includes first and second contact surfaces 10a1, 10a2 that are spaced apart in the circumferential direction. Each retainer 10 applies a contact pressure to the respective pair of adjacent mounted stator coils through the contact surfaces 10a1, 10a2. The first side section 4a1 of each stator coil 4 defines a first facing surface 4c1 and the second side surface 4a2 of each stator coil defines a second facing surface 4c2. The first facing surface 4c1 of each stator coil 4 is in contact with the second contact surface 10a2 of an adjacent first retainer 10 and the second facing surface 4c2 of each stator coil 4 is in contact with the first contact surface 10a1 of an adjacent second retainer 10. The radial position of the adjacent first retainer 10 may be adjusted to vary the contact pressure applied to the first side section 4a1 of the stator coil 4 - i.e., through the contact surface 10a2 and the first facing surface 4c1 of the stator coil. Similarly, the radial position of the adjacent second retainer 10 may be adjusted to vary the contact pressure applied to the second side section 4a2 of the stator coil 4 - i.e., through the first contact surface 10a1 and second facing surface 4c2 of the stator coil.

The contact pressure helps to retain the stator coils 4 on the stator core 3 and may also improve cooling of the stator coils. The contact pressure applied to adjacent stator coils 4 may be adjusted or altered by adjusting the position of each retainer 10 in the radial direction. Each retainer 10 is preferably removable or is removably mounted as described in more detail below. This may allow a particular retainer 10 to be removed if necessary. The stator assembly 1 is designed in such a way that permits the retainers 10 to move radially relative to the adjacent mounted stator coils 4 (and relative to the core segments 2 and stator support) at least during the assembly process - i.e., the position of the retainers 10 is independently adjustable in the radial direction. The retainers 10 may then be fixed in position so that further relative movement is not possible - e.g., during normal operation of the electrical machine. Because the facing surfaces of the pair of adjacent mounted stator coils 4 (e.g., the second facing surface 4c2 of a first stator coil 4 and the first facing surface 4c 1 of an adjacent second coil 4 that are spaced apart by a void 8) are angled with respect to each other - i.e., they are not parallel - to define a substantially trapezoidal void 8 therebetween, it means that the contact pressure that is applied by the contact surfaces 10a1, 10a2 of each retainer 10 and/or the contact area between the contact surfaces 10a1, 10a2 and the facing surfaces 4c1, 4c2 of the adjacent mounted stator coils 4 may be adjusted depending on the radial position of each retainer 10 within the respective void 8. In other words, moving a retainer 10 radially inwardly relative to the stationary parts of the stator assembly 1 will increase the contact pressure that is applied to the adjacent mounted stator coils 4 and *vice versa.* The contact pressure can be adjusted to ensure that each stator coil 4 is properly supported within the stator assembly 1. The contact pressure will normally have a component in the circumferential direction. The retainers 10 may be fixed or locked in position once the contact pressure has been adjusted to the desired level - i.e., once the radial positioning of each retainer 10 has been adjusted. The contact surfaces 10a1, 10a2 of each retainer 10 may be arranged at substantially the same angle as the facing surfaces 4c1, 4c2 of the adjacent mounted stator coils 4 so that each retainer 4 has a substantially trapezoidal cross-section when viewed in the axial direction. If the contact surfaces 10a1, 10a2 and facing surfaces 4c1, 4c2 have substantially the same angle, they may be brought into better sliding surface contact. This may improve the transfer of heat from the adjacent mounted stator coils 4 to the retainer 10 by increasing the contact surface area between them, particularly if the contact pressure is increased so that efficient thermal coupling is maintained. Alternatively, as explained below, one or more interposing components may be positioned between each contact surface 10a1, 10a2 and the facing surface 4c1, 4c2 of the adjacent mounted stator coil 4. In this arrangement, the contact surface 10a1, 10a2 and/or the facing surface 4c1, 4c2 may be brought into sliding surface contact with the interposing component(s). The one or more interposing components may be used to compensate for any differences in the shape of the stator coils 4, for example. Moving a retainer 10 radially inwardly relative to the stationary parts of the stator assembly 1 may increase the contact area - the surface area of each contact surface 10a1, 10a2 that is in contact with the facing surface 4c1, 4c2 of the adjacent mounted stator coil 4 or any interposing component(s) and *vice versa.*

Each void 8 is defined generally on three sides by the facing surfaces 4c1, 4c2 of the adjacent mounted stator coils 4 and the base parts 2b of the adjacent core segments 2 - i.e., the core segments that mount the adjacent stator coils 4. Each void 8 is open on the remaining side. Each retainer 10 includes a first surface 10b, and a second surface 10c that faces towards the core segments 2. The second surface 10c of each retainer 10 contacts the base parts 2b of adjacent core segments 2. An interface between the adjacent core segments 2 (i.e., where the interface is defined by the adjacent side surfaces 2e of the base parts 2b that are in direct contact and which may extend substantially along a radius of the stator core 3) may be arranged substantially at the centre of the second surface 10c of the respective retainer 10. Each retainer 10 includes a pair of angled side surfaces that define the contact surfaces 10a1, 10a2. Each retainer 10 includes a first end 10d1 that is arranged at a radially outer part of the stator core 3 and a second end 10d2 that is arranged at a radially inner part of the stator core 3.

The first surface 10b of each retainer 10 that faces away from the stator core 3 includes retaining features (or lips) 12 that extend in opposite circumferential directions and are adapted to prevent movement of the adjacent stator coils 2 in the axial direction. Each retaining feature 12 directly contacts an adjacent edge of the respective stator coil 4. Each stator coil 4 may therefore be axially retained or captured between the base part 2b of the respective core segment 2 and the retaining feature 12. Typically, each stator coil 4 will be retained by the retaining feature 12 of an adjacent first retainer 10 which overlaps with a first side section 4a1 of the stator coil 4 and by the retaining feature 12 of an adjacent second retainer 10 which overlaps with a second side section 4a2 of the stator coil 4. Providing such retaining features 12 on the retainers 10 avoids the need shoe caps for stator coil retention, thereby leading to significant reductions in cost and materials.

Each retainer 10 is fixed in position by a pair of mechanical fixings 14 such as bolts or screws, for example, which are spaced apart in the radial direction. The mechanical fixings 14 are inserted through aligned openings 16, 18 in the stator support 6 and the stator core 3. The openings 18 in the stator core 3 are defined at the interface between adjacent core segments 2. In particular, part of each opening is defined by a notch or recess 20 that is formed in the side surface 2e of each adjacent core segment 2 - where the notches or recesses 20 are aligned when the core segments 2 are assembled together to form the stator core 3. The mechanical fixings 14 are inserted into a pair of aligned openings 22 in each retainer - i.e., in the second surface 10c of each retainer 10 that faces towards the stator core 3. Each opening 22 is an internally screw-threaded opening for receiving an externally screw-threaded end of a mechanical fixing 14. The aligned openings 16, 18 in the stator support 6 and the stator core 3 are elongate (e.g., formed as slots that extend along the radial direction) so that there is a clearance between the mechanical fixings 14 (including the head part thereof) and the inner surface of the openings 16, 18. If the head part of each mechanical fixing 14 is larger than the shaft part, substantially the same clearance may be maintained by making the open mouth of the opening 16 larger. The head part of each mechanical fixing 14 may include a suitably-shaped recess for receiving a driver or other tool for rotating it. Forming the aligned openings 16, 18 as elongate slots means that each retainer 10 is allowed to move radially relative to the rest of the stator assembly 1 until the mechanical fixings 14 are fully tightened. In other words, when screwed to the retainer 10, the mechanical fixings 14 are free to move within the elongate openings or slots 16, 18 in the stator support 6 and the stator core 3 so that each retainer 10 may be moved radially to adjust the contact pressure that is applied to the adjacent stator coils 4, for example. Once each retainer 10 has been properly positioned within the respective trapezoidal void 8, the mechanical fixings 14 are fully tightened to clamp the retainer 10 against the stator core 3 and prevent any further movement in the radial direction.

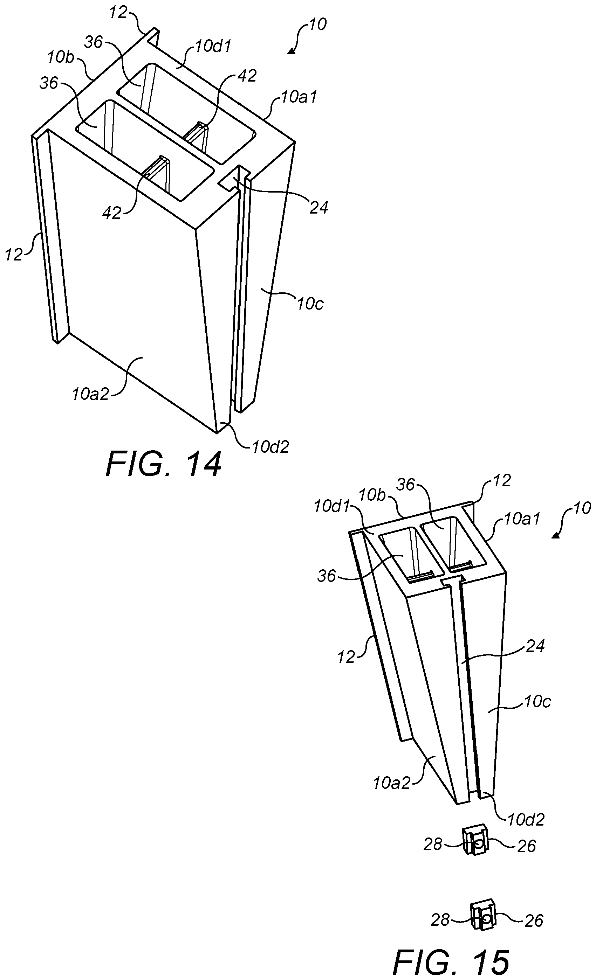

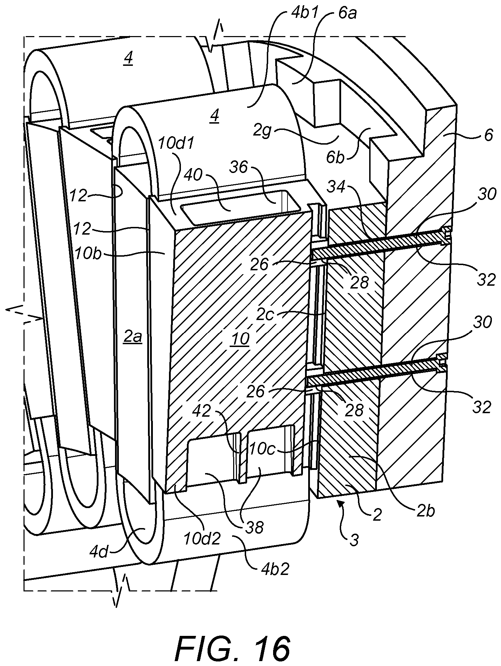

Other ways of allowing relative movement of each retainer 10 may also be used. For example, referring to Figures 14 to 16, instead of each retainer 10 having one more internally screw-threaded openings 22, e.g., in its second surface 10c, its second surface may comprise a T-shaped recess 24 that captures one or more fixing blocks 26. Each fixing block has a corresponding T-shaped profile. The recess 24 extends along the radial direction and each fixing block 26 is free to slide within the recess. Each fixing block 26 includes an opening 28 for receiving a mechanical fixing 30 such as a bolt or screw. In particular, the opening 28 in each fixing block 26 is an internally screw-threaded opening for receiving an externally screw-threaded end of a mechanical fixing 30. A mechanical fixing is inserted through aligned openings 32, 34 in the stator support 6 and the stator core 3 and then into the opening 28 in an aligned fixing block 26. Each retainer 10 may be moved radially to adjust the contact pressure that is applied to the adjacent stator coils 4, for example. In particular, each retainer 10 may be moved relative to the fixing blocks 26 that remain stationary but slide in the recess 24. Once each retainer 10 has been properly positioned within the respective trapezoidal void 8, the mechanical fixings 30 are fully tightened to clamp the retainer 10 against the stator core 3 and prevent any further movement in the radial direction. Although not shown, the retainers 10 may also be allowed to move relative to the stator core 3 in the radial direction if the second surface 10c of each retainer has an engagement profile that engages with a corresponding engagement profile provided on the stator core 3. The engagement profile on each retainer 10 may be a dovetail or T-shaped profile, for example. The stator core 3 may be provided with a plurality of circumferentially-spaced corresponding dovetail or T-shaped profiles, for example, where each profile is located between an adjacent pair of teeth parts. Once the contact pressure has been adjusted to the desired level - i.e., once the radial positioning of each retainer 10 has been adjusted - the retainers 10 are fixed in position relative to the stator core 3. Each retainer 10 may be fixed or secured by inserting one or more wedges or clamps (not shown) into a gap between the respective engagement profiles, for example. This provides an alternative way of adjusting the radial position of each retainer 10 without the need for mechanical fixings, e.g., threaded fasteners such as bolts.

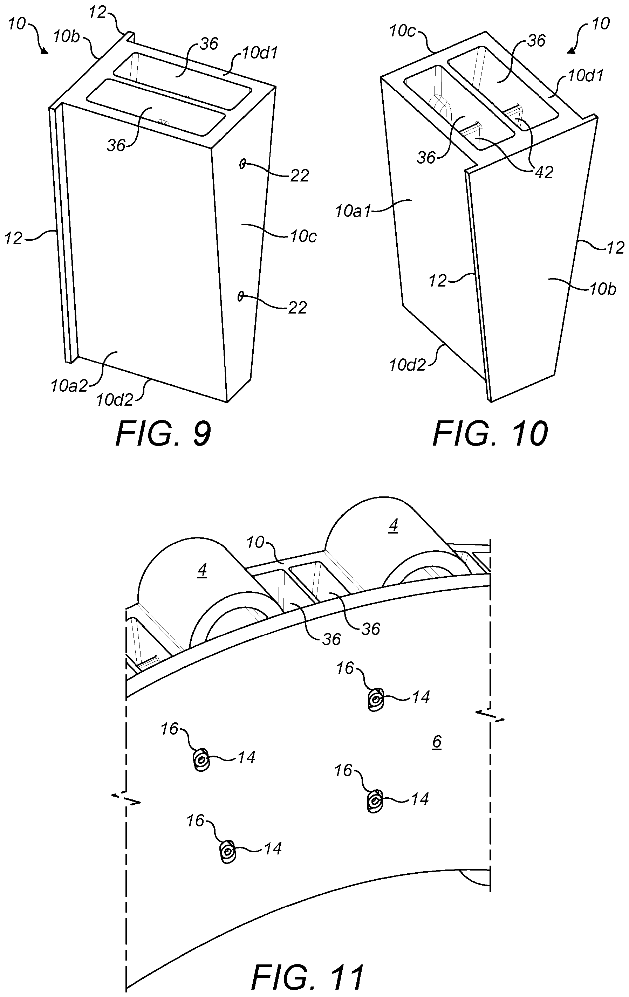

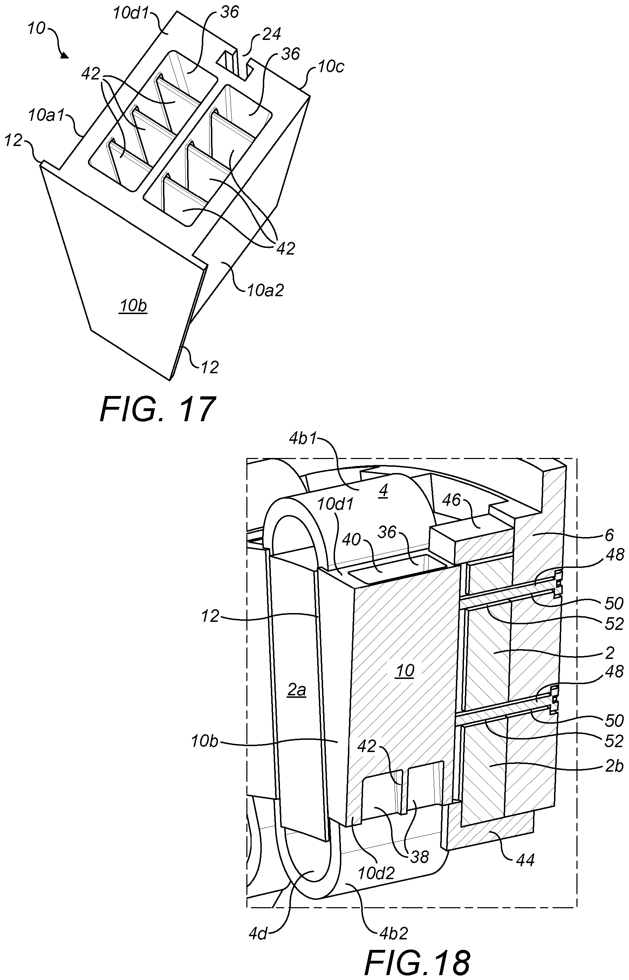

Each retainer 10 may comprise at least one channel for receiving a cooling fluid (e.g., cooling air or a cooling liquid) so that heat from the stator coils 4 may be transferred to the cooling fluid to cool the stator coils 4. In particular, the retainers shown in Figure 9 to 16 includes a pair of cooling channels 36 through which cooling air may flow - e.g., from an air inlet 38 to an air outlet 40. Cooling air may be moved through the retainers 10 by a fan or blower, for example, which circulates air through the stator assembly 1. The first and second ends 10d1, 10d2 of each retainer 10 are substantially open - e.g., the open ends may define the air inlet 38 through which cooling air may enter the retainer 10 and the air outlet 40 through which cooling air may leave the retainer 10. Cooling air flows into each retainer 10 through the second end 10d2 and flow outs of each retainer 10 through the first end 10d1. But the cooling air may also flow through each retainer 10 in the opposite direction - i.e., radially inwardly. It will be understood that many different air cooling arrangements are possible - for example, cooling air may flow into each retainer through a single air inlet, flow through one or more internal channels, and flow out of each retainer through one or more air outlets. The one or more internal channels may be arranged so that the cooling air flows substantially in the radial direction, or in a serpentine or zig-zag direction, for example. Heat generated in the stator coils 4 during operation of the electrical machine may be transferred to the retainers 10 and then to the cooling air flowing through the retainers 10 - i.e., where the retainers act as heat exchangers. Each internal channel may be divided by one or more partitions 42 to increase the surface area for transferring heat from each retainer 10 to the cooling air. For example, in Figure 17, each cooling channel 36 is divided by three partitions 42.

Referring to Figure 18, each retainer 10 may be prevented from moving in the radial direction by stops 44, 46. For example, a stop 46 may be positioned to contact the second end 10d2 of each retainer 10 to prevent movement radially inwardly and a stop 46 may be positioned to contact the first end 10d1 of each retainer 10 to prevent movement radially outwardly. The stops 46 at the first end 10d1 of each retainer 10 may be fitted after the retainers 10 have been inserted into the substantially trapezoidal voids 8 between the mounted stator coils 4 in a radial direction. Movement in the axial direction may be prevented by mechanical fixings 48 that may be inserted through aligned openings 50, 52 in the stator support 6 and the stator core 3 and then inserted into openings in each retainer 10, e.g., in the second surface 10c. In this case, the retainers 10 typically will not be able to move in the radial direction because of the stops 44, 46 after they are fitted. But the aligned openings 50, 52 in the stator support 6 and the stator core 3 are elongate or formed as slots as described above. The retainers 10 are therefore able to move in the radial direction before the stops 44, 46 are fitted. Alternatively, the fixing blocks 26 described above may be used to allow for radial movement of the retainers 10 before the stops 44, 46 are fitted. Different stops 44, 46 may be used to adjust or accommodate the radial positioning of each retainer 10. Contact pressure and/or contact area may also be adjusted by inserting one or more interposing components (e.g., shims) between the contact surfaces 10a1, 10a2 of each retainer 10 and the facing surfaces 4c1, 4c2 of the adjacent mounted stator coils 4 if necessary. Using shims may compensate for variation in the stator coils.

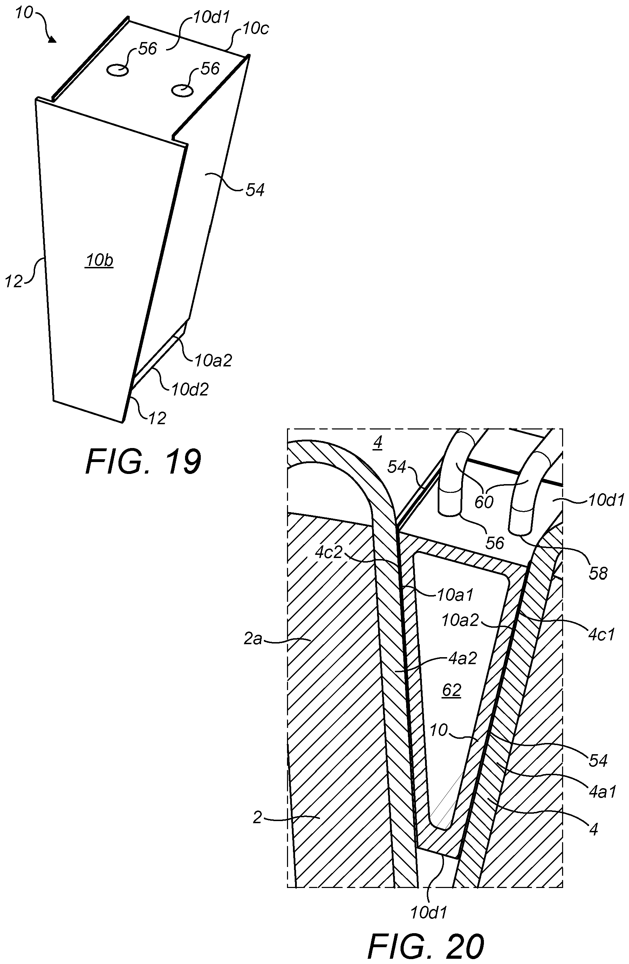

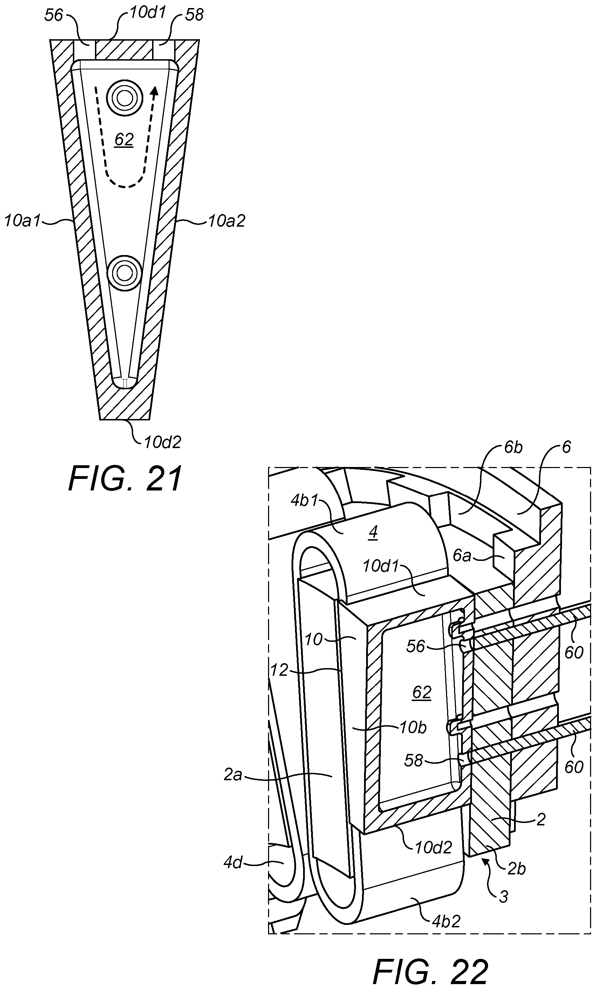

As described above, each contact surface 10a1, 10a2 may be in direct contact with a facing surface 4c 1, 4c2 of the adjacent mounted stator coils 4. The contact pressure may therefore be applied directly to the facing surfaces 4c1, 4c2 of the adjacent mounted stator coils 4 by the contact surfaces 10a1, 10a2 of each retainer 10. However, in some arrangements, such as those shown in Figures 19 and 20, one or more interposing components (e.g., shims 54) may be positioned between a contact surface and the facing surface 4c1, 4c2 of an adjacent mounted stator coil 4 - i.e., so that the contact pressure is applied to the facing surface indirectly. Figures 19 and 20 also show a retainer 10 that is cooled by a cooling liquid that flows from a cooling liquid inlet 56 to a cooling liquid outlet 58. Pipes 60 are fluidly connected to the cooling liquid inlet and outlet 56, 58. As shown in Figure 21, the cooling liquid may flow from the cooling liquid inlet 56 to the cooling liquid outlet 58 through an internal channel 62 of the retainer 10. The cooling liquid inlet and outlet 56, 58 are provided in the first end surface 10d1 of the retainer 10.

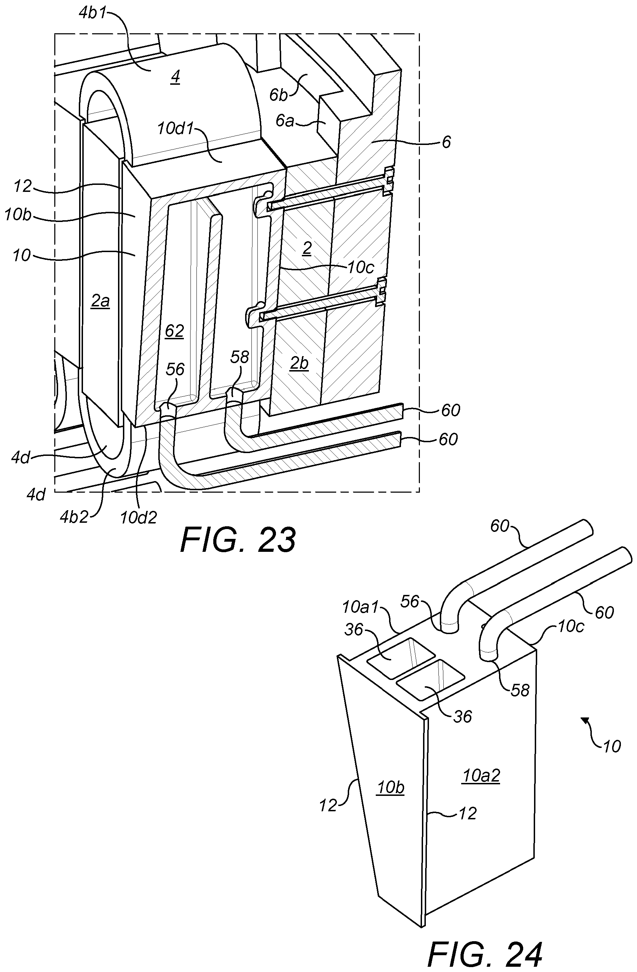

Figure 22 shows an alternative retainer 10 where the cooling liquid inlet and outlet 56, 58 are provided in the second surface 10c of the retainer 10. In this case, the pipes 60 extend through openings in the stator support 6 and the stator core 3 as shown. Figure 23 shows another alternative retainer 10 where the cooling liquid inlet and outlet 56, 58 are provided in the second end surface 10d2 of the retainer 10. In this case, the pipes 60 pass along the radially inner end of the stator core 3 and the stator support 6 as shown.

Each retainer 10 may comprise at least one channel through which a cooling liquid may flow and at least one channel through which cooling air may flow so that the retainers 10 provide a dual cooling function - i.e., both air and liquid cooling. For example, the retainer 10 shown in Figure 24 includes a pair of cooling channels 36 through which cooling air may flow and where cooling liquid flows from a cooling liquid inlet 56 to a cooling liquid outlet 58 through an internal channel (not shown) of the retainer 10.

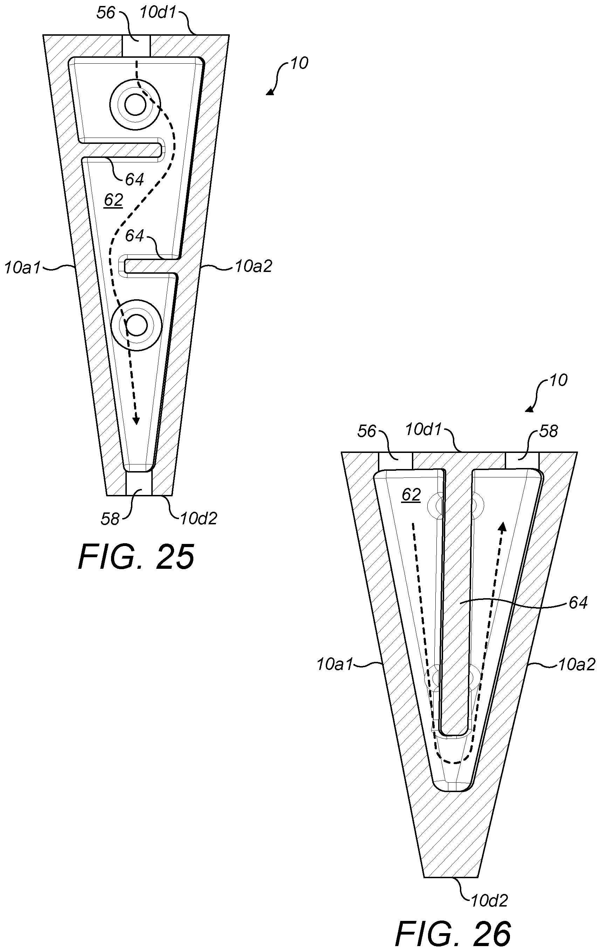

Figure 25 shows how a cooling liquid may flow from a cooling liquid inlet 56 to a cooling liquid outlet 58 through an internal channel 62 of the retainer 10. The cooling liquid inlet 56 is provided in the first end surface 10d1 of the retainer 10 and the cooling liquid outlet 58 is provided in the second end surface 10d2 of the retainer so that the cooling liquid flows radially inwardly past one or more internal baffles 64. But it will be understood that the cooling liquid may flow in the opposite direction - i.e., radially upwardly.

Figure 26 shows how a cooling liquid may flow from a cooling liquid inlet 56 to a cooling liquid outlet 58 through an internal channel 62 of the retainer 10. The cooling liquid inlet and outlet 56, 58 are provided in the first end surface 10d1 of the retainer 10 and the cooling liquid flows radially inwardly then radially outwardly past an internal baffle 64.

Although not shown, each pipe 60 may comprise an isolation valve or non-return valve. The pipes 60 may be fluidly connected to form a closed-loop liquid cooling circuit. One or more cooling circuit outlets may be fluidly connected to one or more cooling circuit inlets for re-circulation of the cooling liquid through the closed-loop liquid cooling circuit. The closed-loop liquid cooling circuit may comprise one or more heat exchangers for removing heat from the cooling liquid and one or more pumps for circulating the cooling liquid, for example. Any suitable cooling liquid may be used, e.g., water, propylene glycol etc.

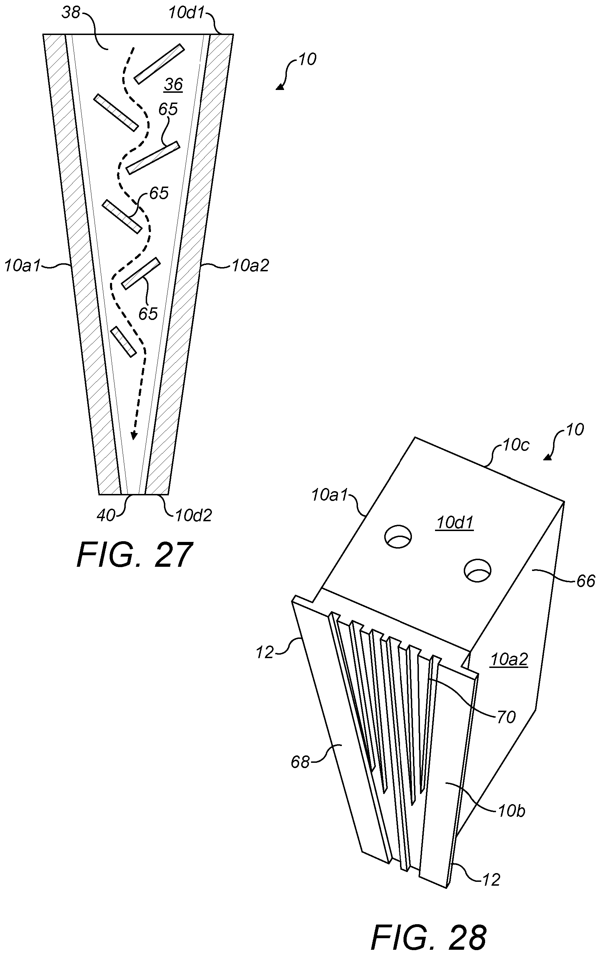

Figure 27 shows how the cooling air may flow past internal baffles 65. The cooling air inlet 38 is provided in the first end surface 10d1 of the retainer 10 and the cooling air outlet 40 is provided in the second end surface 10d2 of the retainer so that the cooling air flows radially inwardly past the internal baffles 65. But it will be understood that the cooling air may flow in the opposite direction - i.e., radially upwardly.

Each retainer 10 may be formed from a single type of material - e.g., a non-magnetic material such as stainless steel, aluminium or a suitable ceramic material, for example. Referring to Figure 28, a first part 66 of each retainer 10 that is arranged adjacent the stator core 3 may be made of a magnetic material and a second part 68 of each retainer that is spaced apart from the stator core 3 (and which defines the first surface 10b of each retainer 10, for example) may be made of a non-magnetic material. A plurality of grooves or channels 70 are formed in the first surface 10b of each retainer 10 that faces away from the stator core 3. The grooves or channels 70 provide an irregular surface that may help minimise electrical losses.

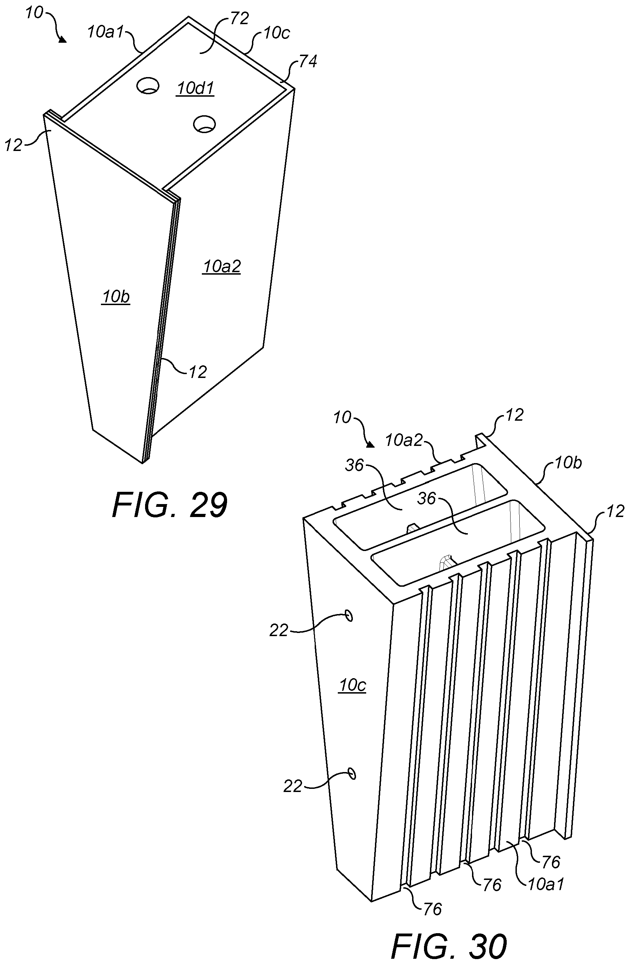

Referring to Figure 29, an inner part 72 (or "core") of each retainer 10 is made of a magnetic material and an outer part 74 (or "surface part") of each retainer 10 is made of a non-magnetic material.

Referring to Figure 30, a plurality of grooves or channels 76 are formed in the contact surfaces 10a1, 10a2 of each retainer 10. Cooling air may therefore also flow through these grooves or channels 76 - i.e., between each retainer 10 and the facing surface 4c1, 4c2 of the adjacent mounted stator coils 4.

## Claims

1. A stator assembly (1) of an axial flux electrical machine, the stator assembly (1) comprising:
a plurality of stator coils (4);
a stator core (3) comprising a plurality of tooth parts (2a) arranged circumferentially, each tooth part (2a) extending axially and being adapted to mount a respective stator coil (4), wherein adjacent mounted stator coils (4) are spaced apart by a substantially trapezoidal void (8); and
a plurality of stator coil retainers (10), each retainer (10) being received in a respective void (8) between a pair of adjacent mounted stator coils (4) and having a position that is independently adjustable in the radial direction relative to the stator core (3) so that a contact pressure that is applied to each mounted stator coil (4) by an adjacent retainer (10) may be independently adjusted.

2. A stator assembly (1) according to claim 1, wherein each retainer (10) comprises a pair of contact surfaces (10a1, 10a2) that are spaced apart in the circumferential direction, and wherein each retainer (10) is adapted to apply a contact pressure to the respective pair of adjacent mounted stator coils (4) through the contact surfaces (10a1, 10a2).

3. A stator assembly (1) according to claim 2, wherein at least part of each contact surface (10a1, 10a2) is in direct contact with the facing surface (4c1, 4c2) of a respective one of the pair of adjacent mounted coils (4), or wherein one or more interposing components (54) are positioned between each contact surface (10a1, 10a2) and the facing surface (4c1, 4c2) of a respective one of the pair of adjacent mounted stator coils (4).

4. A stator assembly (1) according to claim 2 or claim 3, wherein each retainer (10) is adapted to move radially relative to the adjacent mounted stator coils (4) at least during an assembly process to adjust the contact pressure that is applied by the contact surfaces (10a1, 10a2) of each retainer (10) and/or the contact area between the contact surfaces (10a1, 10a2) and the facing surfaces (4c1, 4c2) of the adjacent mounted stator coils (4).

5. A stator assembly (1) according to any preceding claim, wherein each tooth part (2a) comprises a pair of substantially parallel side surfaces (2h1, 2h2) that extend substantially radially and are adapted to mount and support the respective stator coil (4).

6. A stator assembly (1) according to any preceding claim, wherein the stator core (3) is a segmented stator core comprising a plurality of core segments (2) arranged circumferentially, each core segment (2) comprising a tooth part (2a) that extends axially and which is adapted to mount a respective stator coil (4), wherein each core segment (2) further comprises a base part (2b) with a first planar surface (2c) from each the tooth part (2a) axially extends, and a second, opposite, planar surface (2d), and wherein the base part (2b) further comprises a pair of side surfaces (2e) that are spaced apart in the circumferential direction and which optionally extend substantially along a radius of the stator core (3).

7. A stator assembly (1) according to claim 6, wherein the base part (2b) of each core segment (2) has a substantially trapezoidal cross-section when viewed in the axial direction.

8. A stator assembly (1) according to claim 6 or claim 7, further comprising an annular stator support (6), wherein each core segment (2) comprises at least one engagement profile (2g) and an annular surface (6a) of the stator support (6) comprises at plurality of circumferentially-spaced corresponding engagement profiles (6b).

9. A stator assembly (1) according to any preceding claim, where each retainer (10) is removably mounted.

10. A stator assembly (1) according to any preceding claim, wherein each retainer (10) comprises at least one retaining feature (12) that extends in the circumferential direction and is adapted to prevent movement of the adjacent stator coil (4) in the axial direction.

11. A stator assembly (1) according to any preceding claim, wherein each retainer (10) comprises at least one channel (36, 62) for receiving a cooling fluid.

12. A stator assembly (1) according to claim 11, wherein each retainer comprises one or more cooling air inlets (38), one or more cooling air outlets (40), and one or more internal channels (36) that are fluidly connected between the one or more cooling air inlets (38) and the one or more cooling air outlets (40).

13. A stator assembly (1) according to claim 11 or claim 12, wherein each retainer (10) comprises one or more cooling liquid inlets (56), one or more cooling liquid outlets (58), and one or more internal channels (62) that are fluidly connected between the one or more cooling liquid inlets (56) and the one or more cooling liquid outlets (58), and optionally wherein a pipe (60) fluidly connected to at least one of a cooling liquid inlet (56) and a cooling liquid outlet (58) comprises an isolation or non-return valve.

14. A stator assembly (1) according to any preceding claim, wherein part (66) of each retainer (10) is made of a magnetic material and part (68) of each retainer (10) is made of a non-magnetic material, and where optionally a plurality of grooves (70) are formed in a surface of each retainer (10) that faces away from the stator core (3).

15. A stator assembly (1) according to any preceding claim, wherein a plurality of grooves or channels (78) are formed in the contact surfaces (10a1, 10a2) of each retainer (10).
